Europäisches Patentamt

European Patent Office

Office européen des brevets

(11) Publication number: **0 309 594**
**A1**

## EUROPEAN PATENT APPLICATION

(21) Application number: 87102931.0

(51) Int. Cl.⁴: **C01B 13/02**

(22) Date of filing: 02.03.87

(43) Date of publication of application:
05.04.89 Bulletin 89/14

(84) Designated Contracting States:
**BE CH DE FR GB LI**

(71) Applicant: **Ueno, Shinji**
**4-10-9, Tsuboi**
**Kumamoto-shi Kumamoto-ken(JP)**

Applicant: **Koga, Naoki**
**207, 5-22-31, Hirao Chuoh-ku**
**Fukuoka-shi Fukuoka-ken(JP)**

(72) Inventor: **Ueno, Shinji**
**4-10-9, Tsuboi**
**Kumamoto-shi Kumamoto-ken(JP)**
Inventor: **Koga, Naoki**
**207, 5-22-31, Hirao Chuoh-ku**
**Fukuoka-shi Fukuoka-ken(JP)**

(74) Representative: **Liska, Horst, Dr. et al**
**Patentanwälte H. Weickmann, Dr. K. Fincke,**
**F.A. Weickmann, B. Huber, Dr. H. Liska, Dr. J.**
**Prechtel Möhlstrasse 22 Postfach 86 08 20**
**D-8000 München 86(DE)**

(54) A method of generating oxygen gas for emergency use.

(57) A method of generating oxygen gas for emergency use wherein oxygen is generated by intermixing an addition compound of sodium carbonate and hydrogen peroxide or an aqueous solution thereof with a liquid or water-soluble catalyst and wherein a required amount of oxygen is immediately generated and, at the same time, oxygen is generated continuously at a constant rate.

EP 0 309 594 A1

# A METHOD OF GENERATING OXYGEN GAS FOR EMERGENCY USE

Background of the Invention

a) Field of the invention:

The present invention relates to a method of generating oxygen gas and, more particularly, to a method of generating oxygen gas which is effective for the use with a respirator for emergency use.

b) Description of the prior art:

As known methods of generating oxygen gas, there are such methods to use liquid oxygen, compressed air, compressed oxygen, etc. However, said known methods have problems related to storage. Methods to utilize chemical reactions are also known and, among them, there are methods to use a perchlorate, peroxide, etc.

Among said known methods to utilize chemical reactions, there is a means which employs a perchlorate and which is known for a long time under the name of chlorate candle. However, the means called chlorate candle has disadvantages that the temperature of generated oxygen is high, products of the chemical reaction contain toxic gases such as $Cl_2$, and so forth.

There is also a known method to use hydrogen peroxide which is one of peroxides. In said known method, an addition compound of sodium carbonate and hydrogen peroxide ($2Na_2CO_3 \bullet 3H_2O_2$) is used for hydrogen generation because hydrogen peroxide can be easily obtained from the addition compound of sodium carbonate and hydrogen peroxide.

Said known method of generating oxygen gas using an addition compound of sodium carbonate and hydrogen peroxide utilizes the chemical reaction shown below which takes place when the addition compound of sodium carbonate and hydrogen peroxide is intermixed with water in the presence of a catalyst.

$$2Na_2CO_3 \bullet 3H_2O_2 \rightarrow 2(Na_2CO_3 \bullet H_2O) + H_2O + 1.5O_2$$

This reaction takes place as follows. When the addition compound of sodium carbonate and hydrogen peroxide is intermixed with water, the addition compound is decomposed into sodium carbonate and a hydrogen peroxide solution. The hydrogen peroxide solution is then decomposed by the catalyst into water and oxygen. This reaction takes place drastically and, moreover, causes generation of heat. Consequently, depending on the amounts of water and catalyst used, the temperature instantaneously jumps to 100°C causing bumping oxygen and vapor are released simultaneously, and the reaction is completed in a very short space of time. This is not desirable for an oxygen supplying method for cases of accident and sudden illness in which a supply of oxygen is demanded continuously at a constant rate for a certain period of time.

Therefore, in order to generate oxygen of an amount needed for emergency inhalation constantly for a predetermined length of time from an addition compound of sodium carbonate and hydrogen peroxide of an amount that is conveniently carried around and usable in emergencies, it is necessary to check the drastic generation of oxygen and control the reaction so that oxygen is generated at a constant rate for a predetermined period of time. For this particular purpose, it is necessary to add water and a catalyst to the addition compound of sodium carbonate and hydrogen peroxide little by little and slowly by controlling the amounts of water and catalyst to be added while observing the amount of oxygen being generated. In case of emergency, however, it is practically impossible to get a supply of oxygen by making the above-mentioned control.

As a method of generating oxygen contrived in order to eliminate the above-mentioned disadvantage, it is known to form a catalyst into a plural number of solid matters each with a different dissolving speed and to add water to a mixture of said solid matters of the catalyst and addition compound of sodium carbonate and hydrogen peroxide so that the afore-mentioned chemical reaction is thereby caused and oxygen is generated. In said known method of generating oxygen, the solid matters each with a different dissolving speed is prepared by binding the catalyst with gum arabic solutions each with a different concentration, and water is added to a mixture of said solid matters and addition compound of sodium carbonate and hydrogen peroxide so that oxygen is thereby generated at a constant rate for a long period of time.

By said known method of generating oxygen by using an addition compound of sodium carbonate and

2

hydrogen peroxide, it is possible to generate oxygen stably at an approximately constant rate for a certain period of time. However, said known method of generating oxygen has disadvantages as described below. That is, it is impossible to adjust and vary the rate of oxygen to be generated and, furthermore, it is impossible to stop oxygen generation at a desired time. Besides, when once used, the aqueous solution of the addition compound of sodium carbonate and hydrogen peroxide and the catalyst cannot be used again. Moreover, depending on the conditions, a waiting time about one to two minutes is needed after starting of oxygen generation until the required generation rate of oxygen is obtained. This is an unavoidable problem when a catalyst in the solid form is used, and it is not suitable for the use in emergency cases.

## Summary of the Invention

It is, therefore, a primary object of the present invention to provide a method of generating oxygen gas for emergency use wherein oxygen is generated by intermixing an addition compound of sodium carbonate and hydrogen peroxide with a liquid catalyst.

That is, the method of generating oxygen gas for emergency use according to the present invention is arranged that oxygen is generated immediately by putting an addition compound of sodium carbonate and hydrogen peroxide in the form of powder or aqueous solution into a liquid catalyst.

The method of generating oxygen gas for emergency use according to the present invention is also arranged that oxygen is generated immediately be putting a liquid catalyst or a water-soluble catalyst into an aqueous solution of an addition compound of sodium carbonate and hydrogen peroxide.

Another object of the present invention is to provide a method of generating oxygen gas for emergency use wherein oxygen is generated immediately by intermixing an addition compound of sodium carbonate and hydrogen peroxide with a compound catalyst made of a water-soluble catalyst and at least one kind of non-water-soluble catalyst and wherein generation of oxygen is continued for a comparatively long period of time.

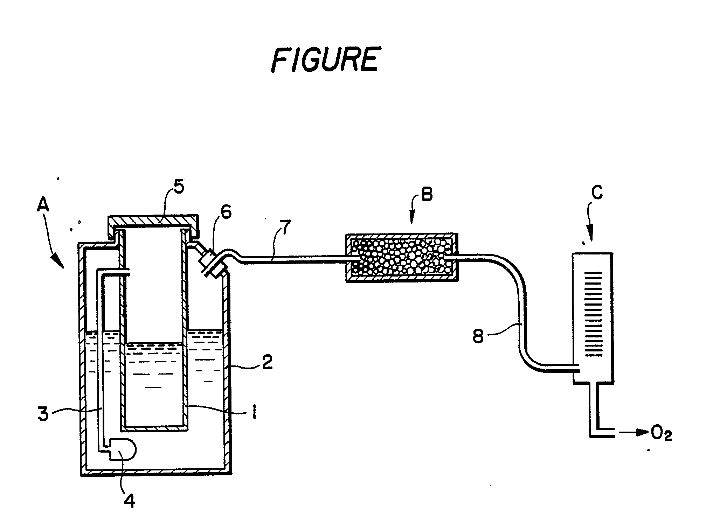

## Brief Description of the Drawing

The accompanying drawing shows a figure illustrating a composition of an oxygen generating system employing the method of generating oxygen gas for emergency use according to the present invention.

## Detailed Description of the Preferred Embodiments

Now, preferred embodiments of the method of generating oxygen gas for emergency use according to the present invention are described below.

Embodiment 1 of the method of generating oxygen gas for emergency use according to the present invention is arranged to generate oxygen by adding an addition compound of sodium carbonate and hydrogen peroxide in the form of powder to an aqueous solution of a liquid catalyst, for example, manganese sulfate ($MnSO_4 \bullet 7H_2O$) or potassium permanganate ($KMnO_4$). That is, the addition compound of sodium carbonate and hydrogen peroxide which is added to the aqueous solution of a liquid catalyst is decomposed into sodium carbonate and a hydrogen peroxide solution and, at the same time, the hydrogen peroxide solution comes into contact with the catalyst and is decomposed into water and oxygen as described before. Thus, oxygen is generated immediately in an amount corresponding to the amount of the addition compound of sodium carbonate and hydrogen peroxide added. Therefore, the amount of oxygen to be generated in a unit time and the duration of oxygen generating time are approximately decided by the amount of the addition compound of sodium carbonate and hydrogen peroxide to be added. Besides, when the addition compound of sodium carbonate and hydrogen peroxide is further added at an adequate rate, oxygen is generated continuously at a constant rate. Furthermore, when it is stopped to supply the addition compound of sodium carbonate and hydrogen peroxide, the rate of oxygen generation decreases gradually and, then, generation of oxygen stops.

As the addition compound of sodium carbonate and hydrogen peroxide is put into the aqueous solution of the catalyst as described in the above, most of said addition compound immediately comes into contact with the catalyst and, consequently, a predetermined amount of oxygen is generated immediately. Here, it is possible to control the amount of oxygen to be generated by increasing or decreasing the amount of the addition compound of sodium carbonate and hydrogen peroxide to be added and it is also possible to stop generation of oxygen by stopping to supply the addition compound of sodium carbonate and hydrogen peroxide.

In said Embodiment 1, an aqueous solution of an addition compound of sodium carbonate and hydrogen peroxide may be used instead of the powder of said addition compound. That is, it is possible to generate oxygen at a constant rate also when the aqueous solution of the addition compound of sodium carbonate and hydrogen peroxide is dripped into a liquid catalyst at a predetermined rate.

Also in this case, it is possible to vary the oxygen generation rate by varying the dripping rate of the aqueous solution of the addition compound of sodium carbonate and hydrogen peroxide and to stop generation of oxygen by stopping to drip said aqueous solution.

Furthermore, colloidal platinum may be used as the liquid catalyst. That is, oxygen can be generated in the same way as above also by adding the addition compound of sodium carbonate and hydrogen peroxide in the form of powder or aqueous solution into the colloidal platinum. Also in this case, it is possible to control the amount of oxygen to be generated by varying the amount of the addition compound of sodium carbonate and hydrogen peroxide to be added and to stop generation of oxygen by stopping to supply said addition compound.

Now, experiment data of Embodiment 1 described so far are shown below. The experiment data given in Tables 1 through 4 shown below respectively illustrate the states of generation of oxygen when 100 g of $Na_2CO_3 \bullet 3H_2O_2$ is added to an aqueous solution prepared by dissolving 4 g of $KMnO_4$ in 500 ml of water. These experiments were made by using the oxygen generating system which is described later and shown on the accompanying drawing.

## Table 1

| time (sec) | 10 | 20 | 30 | 60 | 120 | 180 | 240 | 250 | 260 | 270 | 280 |
|---|---|---|---|---|---|---|---|---|---|---|---|
| amount of generating oxygen (1/min) | 3.0 | 3.0 | 3.0 | 3.0 | 3.0 | 3.0 | 3.0 | 3.7 | 4.0 | 3.2 | 0.0 |

initial temperature of aqueous solution    1°C
final temperature of aqueous solution    24°C

Table 2

| time (sec) | 10 | 30 | 40 | 50 | 60 | 90 | 120 | 180 | 240 | 360 | 420 | 480 |
|---|---|---|---|---|---|---|---|---|---|---|---|---|
| amount of generating oxygen (1/min) | 3.0 | 3.3 | 2.5 | 2.0 | 1.7 | 2.0 | 2.0 | 1.8 | 1.7 | 1.7 | 1.5 | 1.5 |

initial temperature of aqueous solution   10°C
final temperature of aqueous solution   37°C

Table 3

| time (sec) | 10 | 20 | 30 | 40 | 60 | 120 | 180 | 240 | 300 | 360 | 480 |
|---|---|---|---|---|---|---|---|---|---|---|---|
| amount of generating oxygen (1/min) | 5.0 | 3.0 | 2.7 | 1.5 | 1.4 | 1.4 | 1.2 | 1.1 | 1.0 | 1.0 | 1.0 |

initial temperature of aqueous solution   20°C
final temperature of aqueous solution   47°C

Table 4

| time (sec) | 10 | 20 | 30 | 40 | 60 | 70 | 100 | 120 | 140 | 160 | 180 | 210 | 230 | 240 |
|---|---|---|---|---|---|---|---|---|---|---|---|---|---|---|
| amout of generating oxygen (1/min) | 5.0 | 5.0 | 5.0 | 5.0 | 5.0 | 3.8 | 3.5 | 2.5 | 2.0 | 1.9 | 1.9 | 1.6 | 1.6 | 0.0 |

initial temperature of aqueous solution   39°C
final temperature of aqueous solution   53°C

As it will be understood from the experiment data shown in the above, a desired amount of oxygen is generated immediately after beginning of the reaction, oxygen is continuously generated at a substantially constant rate and, when the oxygen generation rate begins to decrease, it decreases rapidly and becomes zero or verysmall value, which is practically ineffective, within one to two minutes. Therefore, by controlling the adding or dripping rate of the addition compound of sodium carbonate and hydrogen peroxide, it is possible to generate oxygen continuously at a constant rate and to control the oxygen generation rate, i.e., to increase or decrease the oxygen generation rate. Furthermore, by stopping to add the addition compound of sodium carbonate and hydrogen peroxide, it is possible to stop generation of oxygen within several minutes.

Embodiment 2 of the method of generating oxygen gas for emergency use according to the present invention is arranged to generate oxygen at a predetermined rate by dripping a liquid catalyst at an adequate rate into an aqueous solution of an addition compound of sodium carbonate and hydrogen peroxide. The method according to said Embodiment 2 also makes it possible to vary the oxygen generation rate by varying the dripping rate of the catalyst.

In said Embodiment 2, a water-soluble catalyst (manganese sulfate, potassium permanganate, etc.) may be used as it is instead of the liquid catalyst. Also in that case, said water-soluble catalyst dissolves immediately when it is put into the aqueous solution of the addition compound of sodium carbonate and hydrogen peroxide, and oxygen is generated immediately.

In Embodiments 1 and 2 described so far, spraying and the like may be considered in addition to dripping as the method of adding the liquid catalyst or aqueous solution of the addition compound of sodium carbonate and hydrogen peroxide.

In case of Embodiment 1 shown in the above, the addition compound of sodium carbonate and hydrogen peroxide should be added repeatedly at every four to five minutes when it is required to generate oxygen continuously for a comparatively long period of time, for example, for 20 to 30 minutes and this is inconvenient.

In case of Embodiment 2, the liquid catalyst will float in a layer on the aqueous solution of the addition compound of sodium carbonate and hydrogen peroxide and, therefore, the chemical reaction will stop within a comparatively short period of time unless the aqueous solution is stirred.

Embodiment 3 of the method of generating oxygen gas for emergency use according to the present invention shown below is arranged to eliminate the above-mentioned disadvantages.

That is, Embodiment 3 of the present invention is arranged to generate oxygen by adding a compound catalyst, which is made by compounding a water-soluble catalyst and at least one kind of non-water-soluble catalyst, to an aqueous solution of an addition compound of sodium carbonate and hydrogen peroxide so that the feature of the water-soluble catalyst which accelerates the chemical reaction is combined with the feature of the non-water-soluble solid catalyst which makes the chemical reaction last so as to thereby arrange that oxygen is generated immediately and, at the same time, oxygen is continuously generated for a comparatively long period of time at a constant rate.

Now, experiment data of Embodiment 3 described in the above are shown below. In the compound catalyst adopted in the experiments according to Embodiment 3, potassium permanganate is used as the water-soluble catalyst and manganese dioxide is used as the non-water-soluble catalyst. That is, Tables 5 through 9 respectively give the experiment data illustrating the states of generation of oxygen when a compound catalyst made of 0.2 g of potassium permanganate ($KMnO_4$) and 3.0 g of manganese dioxide ($MnO_2$) is added to an aqueous solution containing 100 g of an addition compound of sodium carbonate and hydrogen peroxide.

<u>Table 5</u>

| time (sec) | 10 | 20 | 60 | 120 | 180 | 240 | 300 | 360 | 420 | 480 | 540 | 600 | 660 | 720 |
|---|---|---|---|---|---|---|---|---|---|---|---|---|---|---|
| amount of generating oxygen (1/min) | 0.5 | 0.7 | 0.7 | 0.7 | 0.7 | 0.7 | 0.7 | 0.7 | 0.7 | 0.7 | 0.5 | 0.5 | 0.5 | 0.5 |

initial temperature of solution in inner barrel     3°C
final temperature of solution in inner barrel     15°C

initial temperature of solution in outer barrel     3°C
final temperature of solution in outer barrel     10°C

Table 6

| time (sec) | 10 | 20 | 60 | 120 | 180 | 240 | 300 | 360 | 420 | 480 | 540 | 600 | 660 | 720 |
|---|---|---|---|---|---|---|---|---|---|---|---|---|---|---|
| amount of generating oxygen (1/min) | 1.5 | 1.5 | 1.3 | 1.1 | 1.0 | 1.0 | 1.0 | 0.9 | 0.8 | 0.8 | 0.8 | 0.7 | 0.7 | 0.7 |

initial temperature of solution in inner barrel    10°C
final temperature of solution in inner barrel    21°C

initial temperature of solution in outer barrel    10°C
final temperature of solution in outer barrel    16°C

Table 7

| time (sec) | 10 | 20 | 60 | 120 | 180 | 240 | 300 | 360 | 420 | 480 | 540 | 600 |
|---|---|---|---|---|---|---|---|---|---|---|---|---|
| amount of generating oxygen (1/min) | 2.0 | 2.0 | 2.0 | 1.6 | 1.5 | 1.2 | 1.0 | 1.0 | 0.9 | 0.8 | 0.8 | 0.5 |

initial temperature of solution in inner barrel    26°C
final temperature of solution in inner barrel    37°C

initial temperature of solution in outer barrel    26°C
final temperature of solution in outer barrel    27°C

Table 8

| time (sec) | 10 | 20 | 60 | 120 | 180 | 240 | 300 | 360 | 420 | 480 |
|---|---|---|---|---|---|---|---|---|---|---|
| amount of generating oxygen (1/min) | 3.5 | 3.2 | 2.5 | 1.8 | 1.5 | 1.4 | 1.2 | 1.0 | 0.6 | 0.3 |

initial temperature of solution in inner barrel    30°C
final temperature of solution in inner barrel    42°C

initial temperature of solution in outer barrel    30°C
final temperature of solution in outer barrel    34°C

Table 9

| time (sec) | 10 | 20 | 60 | 120 | 180 | 240 | 300 |
|---|---|---|---|---|---|---|---|
| amount of generating oxygen (1/min) | 4.2 | 4.0 | 3.0 | 2.5 | 2.0 | 1.0 | 0.5 |

initial temperature of solution in inner barrel    40°C
final temperature of solution in inner barrel    50°C

initial temperature of solution in outer barrel    38°C
final temperature of solution in outer barrel    41°C

These experiments were made also by uning the oxygen generating system shown on the accompanying drawing. In the figure shown on said drawing, reference symbol A represents an oxygen generating device, reference symbol B represents a dehumidifier, and reference symbol C represents a flow meter.

The oxygen generating device A comprises an inner barrel 1 whose capacity is 1000 cc, an outer barrel 2 whose capacity is 2500 cc, and a gas conduit pipe 3 which is provided with a gas nozzle 4. Besides, the oxygen generating device A is provided with an inlet 5.

In respective experiments according to Embodiment 3, 1000 cc of water was put in the inner barrel 1 and 1500 cc of water was put in the outer barrel 2. Then, the addition compound of sodium carbonate and bydrogen peroxide and the afore-mentioned compound catalyst were put into the inner barrel 1 through the inlet 5 so as to cause the chemical reaction in the inner barrel 1. Oxygen generated by the chemical reaction was conducted through the gas conduit pipe 3 and ejected through the gas nozzle 4 as fine gas bubbles into the water contained in the outer barrel 2 where the mist of calcium carbonate etc. was eliminated. Then, oxygen was conducted from the oxygen outlet 6 to the dehumidifier B through the conduit pipe 7 so as to eliminate moisture by the dehumidifier B. After that, oxygen was led to the flow meter C through the conduit 8 and measured.

In case of Embodiment 3 described in the above, as it is evident from Tables 5 through 9, oxygen is generated immediately when the addition compound of sodium carbonate and hydrogen peroxide and the compound catalyst were put in and, moreover, it is possible to generate oxygen continuously for a comparatively longer period of time compared with Embodiments 1 and 2.

As described so far, the method of generating oxygen gas according to the present invention makes it possible to generate a required amount and rate of oxygen immediately when oxygen is needed and, therefore, it is extremely effective for emergency use for medical purposes and for emergency use in cases of an accident and the like.

**Claims**

1. A method of generating oxygen gas for emergency use wherein an addition compound of sodium carbonate and hydrogen peroxide in the form of powder is put into a liquid catalyst so as to thereby generate oxygen.

2. A method of generating oxygen gas for emergency use according to Claim 1 wherein said liquid catalyst is an aqueous solution of manganese sulfate.

3. A method of generating oxygen gas for emergency use according to Claim 1 wherein said liquid catalyst is an aqueous solution of potassium permanganate.

4. A method of generating oxygen gas for emergency use according to Claim 1 wherein said liquid catalyst is colloidal platinum.

5. A method of generating oxygen gas for emergency use wherein a liquid catalyst is added to an aqueous solution of an addition compound of sodium carbonate and hydrogen peroxide so as to thereby generate oxygen.

6. A method of generating oxygen gas for emergency use according to Claim 5 wherein said liquid catalyst is an aqueous solution of manganese sulfate.

7. A method of generating oxygen gas for emergency use according to Claim 5 wherein said liquid catalyst is an aqueous solution of potassium.permanganate.

8. A method of generating oxygen gas for emergency use according to Claim 5 wherein said liquid catalyst is colloidal platinum.

9. A method of generating oxygen gas for emergency use wherein a water-soluble catalyst is added to an aqueous solution of an addition compound of sodium carbonate and hydrogen peroxide so as to thereby generate oxygen.

10. A method of generating oxygen gas for emergency use according to Claim 9 wherein said catalyst is manganese sulfate.

11. A method of generating oxygen gas for emergency use according to Claim 9 wherein said catalyst is potassium permanganate.

12. A method of generating oxygen gas for emergency use wherein a compound catalyst made of a water-soluble catalyst and at least one kind of non-water-soluble catalyst is added to an aqueous solution of an addition compound of sodium carbonate and hydrogen peroxide so as to thereby generate oxygen.

FIGURE

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | PATENT ABSTRACTS OF JAPAN, vol. 3, no. 50 (C-44), 27th April 1979, page 138 C44; & JP - A - 54 26991 (NIPPON PEROXIDE K.K.) 28-02-1979 | 1,2 | C 01 B   13/02 |
| A | PATENT ABSTRACTS OF JAPAN, vol. 7, no. 3 (C-143)[1148], 7th January 1983; & JP - A - 57 160 902 (YOSHINORI SEIJI) 04-10-1982 | 12 | |
| A | EP-A-0 093 938  (HOSHIKO MEDICAL LABORATORIES) * claims 1, 5-6 * | 12 | |
| A | DE-B-2 207 281  (SIEMENS AG) * column 2, lines 1-56 * | 4 | |

TECHNICAL FIELDS SEARCHED (Int. Cl.4)

C 01 B   13/02

The present search report has been drawn up for all claims

| Place of search | Date of completion of the search | Examiner |
|---|---|---|
| BERLIN | 07-10-1987 | CLEMENT  J.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82